# EUROPÄISCHE PATENTANMELDUNG

(11) **EP 3 967 895 A1**
(43) Veröffentlichungstag der Anmeldung: **16.03.2022**
(21) Anmeldenummer: 20196279.2
(22) Anmeldetag: 15.09.2020
(51) Int. Cl.: F16C 27/06, F16C 25/08

(54) **EINSTELLBARE LAGERANORDNUNG FÜR GETRIEBE, INSBESONDERE FÜR WINDKRAFTANLAGEN**

(71) Anmelder: Flender GmbH, 46395 Bocholt (DE)
(72) Erfinder: Flück, Daniel, 46348 Raesfeld (DE); Hebing, Marco, 46499 Hamminkeln (DE); König, Christian, 44805 Bochum (DE); Schroer, Daniel, 46325 Borken (DE)
(74) Vertreter: Michalski Hüttermann & Partner Patentanwälte mbB

(57) **Zusammenfassung**

Die Erfindung betrifft eine Lageranordnung (30), die ein erstes und ein zweites Wälzlager (10,20) umfasst. Zwischen diesen ist ein Distanzelement (40) angeordnet. Erfindungsgemäß ist das Distanzelement (40) zu einem Hervorrufen eines Prüfspalts (46) zwischen dem Distanzelement (40) einer Komponente (11) des ersten Wälzlagers (10) mit mindestens einem in Axialrichtung (41) elastischen Federelement (42) versehen. Die Erfindung betrifft ebenso ein Verfahren (100) zur Montage einer Lageranordnung (30), die ein erstes, ein zweites Wälzlager (10,20) und ein Distanzelement (40) umfasst. Das Verfahren (100) umfasst einen ersten Schritt (110), in dem ein Einsetzen des ersten und zweiten Wälzlagers (10,20) und des Distanzelements (40) in einer Nabe (57) erfolgt. Es folgt ein zweiter Schritt (120), in dem ein Einsetzen einer Welle oder Hohlwelle (18) in das erste und zweite Wälzlager (10,20) und Aufbringen einer Axialkraft (35) auf die Lageranordnung (30) durchgeführt wird. In einem dritten Schritt (130) erfolgt ein Prüfen oder Messen einer Spaltbreite (47) eines Prüfspalts (46). Erfindungsgemäß ist der Prüfspalt (46) zwischen dem Distanzelement (40) und einer Komponente (12,14,16) des ersten Wälzlagers (10) ausgebildet.

## Beschreibung

Die Erfindung betrifft eine Lageranordnung, die zum Erreichen einer verbesserten Einstellbarkeit ausgebildet ist. Die Erfindung betrifft auch ein Montageverfahren für eine solche Lageranordnung. Ebenso betrifft die Erfindung ein Getriebe, das über eine solche Lageranordnung verfügt, einen entsprechenden Antriebsstrang und eine entsprechende Windkraftanlage. Gleichermaßen betrifft die Erfindung ein Computerprogrammprodukt, das zum Simulieren eines Betriebsverhaltens einer solchen Lageranordnung ausgebildet ist.

Die Druckschrift WO 2005/107044 A1 offenbart eine Lageranordnung mit zwei Rillenkugellagern, die zueinander benachbart angeordnet sind. Zwischen den Rillenkugellagern ist ein ringförmiges Distanzelement angebracht, durch das ein axialer Abstand zwischen den Rillenkugellagern definiert ist. Axial außen sind an einem Gehäuse Deckel angebracht, an denen Federelemente angebracht sind, die im montierten Zustand jeweils eine Druckkraft auf die Außenringe der Rillenkugellager ausüben.

Aus WO 2016/037781 A1 ist eine Lageranordnung für eine elektrische Maschine bekannt, die ein Kugellager umfasst, das in einer Nabe in einer Gehäusewand aufgenommen ist. An einem Außenring des Kugellagers ist eine Feder angebracht, die durch ein Andrücken eines Deckels spannbar ist. Dadurch wird auf das Kugellager eine axiale Vorspannung hervorgerufen.

Lageranordnungen werden, beispielsweise im Getriebebau, zunehmenden Beanspruchungen ausgesetzt, so dass diese häufig mehrere Lager umfassen. In derartigen Anordnungen ist eine präzise Einstellung der Lageranordnungen immer vordringlicher. Kompakte Konstruktionen wiederum erschweren typischerweise den Zugang zu den einzelnen Komponenten einer Lageranordnung. Daher existieren indirekte Einstellungsverfahren für Lageranordnungen, die allerdings mit hohen Unsicherheiten einhergehen. Darüber hinaus sind axiale Vorspannungen nicht in Form von geometrischen Maßen unmittelbar messbar. Es besteht deshalb Bedarf an einer leistungsfähigen Lageranordnung, die präzise einstellbar ist, schnell montierbar und kosteneffizient in der Herstellung. Der Erfindung liegt die Aufgabe zugrunde, eine technische Möglichkeit bereitzustellen, die in zumindest einem der genannten Aspekte eine Verbesserung bietet.

Die Aufgabenstellung wird durch eine erfindungsgemäße Lageranordnung gelöst, die ein erstes und ein zweites Wälzlager umfasst. Zwischen dem ersten und zweiten Wälzlager ist ein Distanzelement, beispielswiese ein Distanzring, angeordnet, durch den zwischen den Wälzlagern in einem vormontierten Zustand ein definierter Abstand in einer Axialrichtung eingestellt ist. Erfindungsgemäß ist zwischen dem Distanzelement und einer Komponente des ersten Wälzlagers zumindest ein elastisches Federelement angeordnet, durch das in Axialrichtung eine Rückstellkraft, also eine Federkraft, ausübbar ist. Das elastische Federelement ist derart angeordnet, dass im vormontierten Zustand zwischen dem Distanzelement und der Komponente des ersten Wälzlagers ein Prüfspalt hervorgerufen wird. Das Federelement ist dazu mit dem Distanzelement als auch mit der Komponente des ersten Wälzlagers in Kontakt. Der Prüfspalt weist Abmessungen auf, insbesondere eine Spaltbreite, die im Wesentlichen von der vom mindestens einen Federelement im montierten Zustand ausgeübten Rückstellkraft abhängig ist. Der Prüfspalt wiederum ist beispielsweise mittels einer Fühlerlehre schnell und präzise prüfbar. Hieraus ist in einfacher Weise eine Höhe einer in der Lageranordnung im endmontierten Zustand vorliegenden axialen Vorspannkraft ableitbar. Andere Aspekte und Größen, die insbesondere indirekte Einstellungsverfahren gemäß dem Stand der Technik beeinflussen, und dadurch Unsicherheiten hervorrufen, spielen in der erfindungsgemäßen Lageranordnung keine Rolle. Abmessungen eines Prüfspalts sind schnell und kosteneffizient mit erhöhter Präzision messbar. Die erfindungsgemäße Lageranordnung verbindet folglich erhöhte Präzision beim Einstellen mit erhöhter Robustheit.

In einer Ausführungsform der beanspruchten Lageranordnung ist die Komponente des ersten Wälzlagers eine stationäre Komponente, beispielsweise ein Außenring oder ein Innenring. Außenringe und Innenringe sind über einen Bord in Axialrichtung belastbar und erlauben es, in Axialrichtung eine Vorspannkraft einzuleiten, ohne dabei Wälzkörper zu beeinträchtigen. Alternativ oder ergänzend kann die Komponente des ersten Wälzlagers, an der sich das elastische Federelement abstützt, auch eine rotierende Komponente des Wälzlagers sein, beispielsweise ein Lagerring.

In der beanspruchten Lageranordnung kann das Federelement als eine Druckfeder, beispielsweise in Form einer Schraubenfeder, oder als Tellerfeder ausgebildet sein. Druckfedern sind in einer Vielzahl an Größen und Federstärken verfügbar und weisen ein exakt vorhersagbares Materialverhalten, beispielsweise Relaxation, auf. Eine derartige Druckfeder ist ferner kosteneffizient herstellbar. Tellerfedern sind besonders kompakt ausgebildet und können in einfacher und exakt vorhersagbarer Weise zu Federpaketen kombiniert werden. Weiter alternativ kann das mindestens eine Federelement auch als ein Elastomerkörper ausgebildet sein. Darunter ist ein Körper aus jeglichem Werkstoff zu verstehen, der einen hinreichend niedrigen E-Modul auf Druck verfügt und funktionell als Federelement geeignet ist. Das Federelement in der beanspruchten Lageranordnung kann auch als eine Kombination dieser Möglichkeiten ausgebildet sein.

Darüber hinaus können das erste und/oder zweite Wälzlager als Pendelrollenlager, als Kegelrollenlager, als Schrägkugellager, oder als Axial-Pendelrollenlager ausgebildet sein. Derartige Wälzlager erlauben es in vorteilhafter Weise, eine Axialbeanspruchung auf den Außenring oder Innenring als Druckbeanspruchung in die schräggestellten Wälzkörper einzuleiten und in den Innenring bzw. Außenring weiterzuleiten. Dadurch ist die auf die Lageranordnung ausgeübte Axialkraft dauerhaft und zuverlässig vom Innenring auf den Außenring oder umgekehrt weiterleitbar. Insbesondere können derartige Wälzlager in einer O-Anordnung oder einer X-Anordnung angebracht werden, um so eine anforderungsgerechte Lageranordnung herzustellen. Pendelrollenlager, Kegelrollenlager, Schrägkugellager und Axial-Pendelrollenlager sind in einer Vielzahl an Größen verfügbar und gewährleisten für die beanspruchte Lageranordnung ein hohes Maß an Anpassbarkeit.

Des Weiteren kann das Distanzelement in einem Bereich einer rotierenden Komponente des ersten und/oder zweiten Wälzlagers kontaktfrei sei. Das Distanzelement erstreckt sich entlang einer Radialrichtung in Richtung der rotierenden Komponente des Wälzlagers, ohne es dort zu berühren. Das Distanzelement kann dabei beispielsweise scheibenförmig ausgebildet sein und so die Steifigkeit des Distanzelements erhöhen. Das Distanzelement ist dadurch widerstandsfähig gegen Verformungen, die durch dynamische Axialbeanspruchungen auf die Lageranordnung hervorrufbar sind. Ein Zwischenraum, der sich zwischen dem ersten und zweiten Wälzlager ergibt, wird so ausgenutzt. Ferner können im Distanzelement Kanäle für Schmierstoff, beispielsweise Öl, ausgebildet sein. Dadurch ist eine gezielte Zufuhr an Schmierstoff in diesem Bereich in einfacher Weise gezielt umsetzbar.

In einer weiteren Ausführungsform der beanspruchten Lageranordnung kann eine Mehrzahl an Federelementen angeordnet sein. Die Federelemente können in Umfangsrichtung am Distanzelement gleichmäßig beabstandet angeordnet sein. Dadurch ist entlang des Umfangs eine gleichmäßige Spaltbreite des Prüfspalt gewährleistbar. Je mehr Federelemente eingesetzt werden, umso höher kann die Axialkraft sein, die auf die Lageranordnung wirkt. Darüber hinaus wird durch eine Mehrzahl an elastischen Federelementen eine über den Umfang gleichmäßigere Verteilung einer Axialkraft erreicht.

Ferner können die Außenringe der Wälzlager, also des ersten und zweiten Wälzlagers, in einem Gehäuseabschnitt aufgenommen sein. Ein derartiger Gehäuseabschnitt kann insbesondere verjüngt ausgebildet sein. Dementsprechend ist das Distanzelement ebenfalls am Gehäuseabschnitt anbringbar, wobei dieser im Bereich der Wälzlager und des Distanzelement einen gleichbleibenden Innendurchmesser aufweist. Der Bereich des Gehäuseabschnitts, in dem die Wälzlager und das Distanzelement angeordnet sind, kann somit in einfacher Weise ohne Schultern oder Vorsprünge ausgebildet sein. Dies erlaubt nicht nur eine kosteneffiziente Herstellung, sondern auch eine einfache Montage der beanspruchten Lageranordnung in Axialrichtung.

In einer weiteren Ausführungsform der beanspruchten Lageranordnung ist an den Innenringen der Wälzlager eine Leistungswelle angeordnet, die als Welle oder Hohlwelle ausgebildet ist. Die als Welle oder Hohlwelle ausgebildete Leistungswelle kann insbesondere als Getriebeausgangswelle dienen. Die exakte Einstellbarkeit der beanspruchten Lageranordnung bewirkt, dass die Spezifikationen der Wälzlager weitestgehend ausgeschöpft werden können, um so eine mit hohem Drehmoment, hohen Radialkräften, hohen Axialkräften beaufschlagte und/oder schnelldrehende Welle oder Hohlwelle in vorteilhafter Weise zu lagern. Dies erlaubt es, mittels der beanspruchten Lageranordnung besonders leistungsfähige Getriebe zu verwirklichen. Ebenso können Wellen oder Hohlwellen in vorteilhafter Weise gelagert werden, an die eine hohe Anforderungen bei der axialen Positionierung, die radiale Steifigkeit und die Lebensdauer der Wälzlager gestellt werden

Des Weiteren kann das zumindest eine elastische Federelement in einer Vertiefung im Distanzelement aufgenommen sein. Die Vertiefung kann dabei beispielsweise als Axialbohrung und/oder als Nut ausgebildet sein. Die Vertiefung im Distanzelement gibt dem Federelement Führung, so dass beispielsweise ein Ausknicken des Federelements verhindert wird. Die Vertiefung erlaubt es auch, Federelemente mit erhöhter Abmessung Axialrichtung einzusetzen. Dementsprechend steht eine erhöhte Anzahl an konstruktiven Auslegungsmöglichkeiten für das Federelement zur Verfügung. Die Vertiefung im Distanzelement erlaubt es auch, mehrere elastische Komponenten zu einem Federelement zu kombinieren. Beispielsweise können Druckfedern unterschiedlicher Federstärke hintereinander oder parallel angeordnet werden, um so für das Federelement eine angestrebte Federkennlinie hervorzurufen. Die beanspruchte Lageranordnung kann dadurch an eine Vielzahl an Anwendungsfällen angepasst werden. Alternativ oder ergänzend kann das elastische Federelement auch in einer Vertiefung in einer Komponente des ersten Wälzlagers aufgenommen sein. Die Vertiefung an der Komponente des ersten Wälzlagers kann beispielsweise als Axialbohrung und/oder Nut ausgebildet sein.

Die Aufgabenstellung wird auch durch ein erfindungsgemäßes Verfahren zur Montage einer Lageranordnung gelöst. Die zu montierende Lageranordnung umfasst ein erstes und ein zweites Wälzlager und eine Distanzelement. Die Lageranordnung ist an einer entsprechend geeigneten Nabe zu montieren. Die Nabe kann dazu beispielsweise in einer Gehäusewandung, also einem Gehäuseabschnitt, ausgebildet sein. Das Verfahren umfasst einen ersten Schritt, in dem das erste und zweite Wälzlager auf eine Leistungswelle aufgesetzt werden. Die Leistungswelle kann als Welle oder Hohlwelle ausgebildet sein. Ebenso wird das Distanzelement auf die Leistungswelle aufgesetzt. Das Distanzelement dient dazu, das erste und zweite Wälzlager voneinander zu beabstanden und wird im ersten Schritt zwischen dem ersten und zweiten Wälzlager aufgesetzt. In einem zweiten Schritt des Verfahrens wird eine Axialkraft auf die Lageranordnung aufgebracht. Durch die Axialkraft wird die Lageranordnung auf Druck in Axialrichtung beansprucht. Die Wälzlager und das Distanzelement werden durch eine Federkraft auseinandergedrückt, so dass ein Prüfspalt zwischen dem Distanzelement und dem ersten Wälzlager entsteht.

Das Verfahren umfasst einen dritten Schritt, in dem ein Prüfspalt geprüft oder gemessen wird, dessen Spaltbreite von Abmessungen der Wälzlager, des Distanzelements und der Welle bzw. Hohlwelle abhängig ist. Dazu kann die Spaltbreite beispielsweise mittels Fühlerlehren geprüft werden. Erfindungsgemäß ist der Prüfspalt zwischen dem Distanzelement und einer Komponente des ersten Wälzlagers ausgebildet. Die Spaltbreite ist ferner robust gegen Störeinflüsse, wodurch das erfindungsgemäße Verfahren ein hohes Maß an Zuverlässigkeit bietet. Basierend auf der Prüfung der Spaltbreite lässt sich diese weiter anpassen, beispielsweise durch erneutes Montieren und/oder Überarbeiten eines Wälzlagers, des Distanzelements und/oder der Welle bzw. Hohlwelle. Das erfindungsgemäße Verfahren erlaubt, es eine Lageranordnung präzise einzustellen und so die eingesetzten Wälzlager technisch weitestgehend auszunutzen, ohne dabei das Risiko einer Überlastung einzugehen. Nach Prüfung des Prüfspalts kann die Welle mit dem ersten und zweiten Wälzlager und dem Distanzelement in eine Nabe eingesetzt werden. Dazu kann die Nabe beispielsweise durch Erwärmung geweitet werden. Bei einem Abkühlen der Nabe können das erste und zweite Wälzlager fixiert werden. Im endmontierten Zustand kann ein Prüfspalt zwischen dem ersten Wälzlager und dem Distanzelement erhalten werden, um so die vorhandene Federkraft des Federelements aufrechtzuerhalten. Alternativ dazu kann sich im endmontierten Zustand eine Axialvorspannung einstellen, so dass das erste Wälzlager und das Distanzelement in Kontakt stehen.

In einer Ausführungsform des beanspruchten Verfahrens ist die Lageranordnung, die zu montieren ist, gemäß zumindest einer der oben skizzierten Ausführungsformen ausgebildet. Die Verwendung eines elastischen Federelements stellt eine konstruktiv einfache und kosteneffiziente Möglichkeit dar, einen Prüfspalt bereitzustellen, bei dem ein eindeutiger Zusammenhang zwischen der Spaltbreite und der vorliegenden Axialkraft vorliegt. Derartige Ausführungsformen sind ferner kompakt und weisen eine erhöhte Lebensdauer auf.

Gleichermaßen wird die eingangs beschriebene Aufgabe durch ein erfindungsgemäßes Getriebe gelöst. Das Getriebe umfasst zumindest eine Planetenstufe, die über eine Leistungswelle verfügt, die als Getriebeausgangswelle oder Getriebeeingangswelle ausgebildet sein kann. Die Leistungswelle wirkt drehmomentübertragend mit der Planetenstufe zusammen und ist in einem Gehäuseabschnitt des Getriebes drehbar gelagert. Die Leistungswelle ist dazu in einer Lageranordnung aufgenommen, die nach einer der oben dargestellten Ausführungsformen ausgebildet sein kann. Die Lageranordnung ist präzise einstellbar, wodurch die technischen Kapazitäten der Wälzlager in der Lageranordnung weitestgehend ausschöpfbar sind. Dies erlaubt es wiederum, die Leistungswelle auf eine Übertragung einer maximalen Antriebsleistung auszulegen. Ferner können Festigkeitsreserven für die Leistungswelle eingespart werden, so dass bei der Leistungswelle eine Gewichtsersparnis erzielbar ist. Infolgedessen ist das erfindungsgemäße Getriebe leistungsfähig und gleichzeitig relativ leicht. Der Nachteil einer zu hohen Axialvorspannkraft, kann vermieden werden, durch die die zu erwartende nutzbare Lebensdauer der Wälzlager reduziert wird. Ebenso ist der Nachteil einer zu niedrigen Axialvorspannkraft vermeidbar, durch die die Welle nicht ausreichend hoch belastet werden kann, beispielsweise mit einem Rotor eines Generators.

Die zugrundeliegende Aufgabenstellung wird ebenso durch einen erfindungsgemäßen Antriebsstrang für eine Windkraftanlage gelöst. Der Antriebsstrang umfasst eine Hauptwelle, die drehmomentübertragend mit einem Mehrblattrotor der Windkraftanlage verbindbar ist. Der Antriebsstrang umfasst auch ein Getriebe, das drehmomentübertragend mit der Hauptwelle verbunden ist. Dass Getriebe wiederum ist drehmomentübertragend mit einem Generator verbunden. Der Generator kann dabei als Generatoreinheit ausgebildet sein, die in das Getriebe integriert ist, und so ein Generatorgetriebe bilden. Derartige Generatorgetriebe sind beispielsweise aus der bisher unveröffentlichten Europäischen Patentanmeldung EP 20186499.8 bekannt. Der Offenbarungsgehalt von EP 20186499.8 wird durch Verweisung in die vorliegende Anmeldung mit einbezogen.

Genauso wird die eingangs skizzierte Aufgabe durch eine erfindungsgemäße Windkraftanlage gelöst. Die Windkraftanlage umfasst eine Gondel, an der drehbar ein Mehrblattrotor angebracht ist. Der Mehrblattrotor ist drehmomentübertragend mit einer Hauptwelle verbunden, die zu einem Antriebsstrang gehört. Der Antriebsstrang ist in der Gondel aufgenommen und ist erfindungsgemäß nach einer der oben beschriebenen Ausführungsformen ausgebildet.

Die zugrundeliegende Aufgabenstellung wird auch durch ein erfindungsgemäßes Computerprogrammprodukt gelöst, das zu einem Simulieren eines Betriebsverhaltens einer Lageranordnung ausgebildet ist. Dazu kann das Computerprogrammprodukt Daten zur Kinematik Wälzlager, des zumindest einen Federelements, oder der Leistungswelle umfassen. Ferner kann das Computerprogrammprodukt Simulationsroutinen umfassen, die dazu ausgebildet sind, basierend auf Angaben zum vorliegenden Betriebszustand, beispielsweise einer Drehzahl, eines Drehmoments, einer Schmierstofftemperatur, einer Umgebungstemperatur, einer Axialbeanspruchung, einer Radialbeanspruchung und Verbindung mit Abmessungen der Wälzlager, des Distanzelement, des zumindest einen Federelements deren Verhalten zu simulieren. Dies kann ein Biegeverhalten, ein Ermüdungsverhalten, eine Veränderung einer axialen Vorspannkraft, ein thermisches Verhalten und/oder ein Vibrationsverhalten umfassen. Das Computerprogrammprodukt kann auch eine Datenschnittstelle aufweisen, über die die Angaben zum vorliegenden Betriebszustand vorgebbar sind. Ebenso kann das Computerprogrammprodukt auch eine Datenschnittstelle zum Ausgeben von Simulationsergebnissen aufweisen. Darüber sind Resultate des Computerprogrammprodukts an andere simulationsgerichtete Computerprogrammprodukte ausgebbar. Erfindungsgemäß ist die Lageranordnung, deren Betriebsverhalten mittels des Computerprogrammprodukts simulierbar ist, gemäß mindestens einer der oben skizzierten Ausführungsformen ausgebildet. Das Computerprogrammprodukt kann dazu beispielsweise als sogenannter Digitaler Zwilling ausgebildet sein. Derartige Digitale Zwillinge sind unter anderem in der Offenlegungsschrift US 2017/0286572 A1 dargestellt.

Der Offenbarungsgehalt von US 2017/0286572 A1 wird durch Verweisung in die vorliegende Anmeldung mit einbezogen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: eine erste Ausführungsform der beanspruchten Lageranordnung in einem montierten Zustand in einem Längsschnitt;
- FIG 2: eine Detailansicht der ersten Ausführungsform der Lageranordnung nach FIG 1 in einem vormontierten Zustand;
- FIG 3: eine Schrägansicht einer zweiten Ausführungsform der beanspruchten Lageranordnung;
- FIG 4: eine geschnittene Schrägansicht einer Ausführungsform der beanspruchten Windkraftanlage.

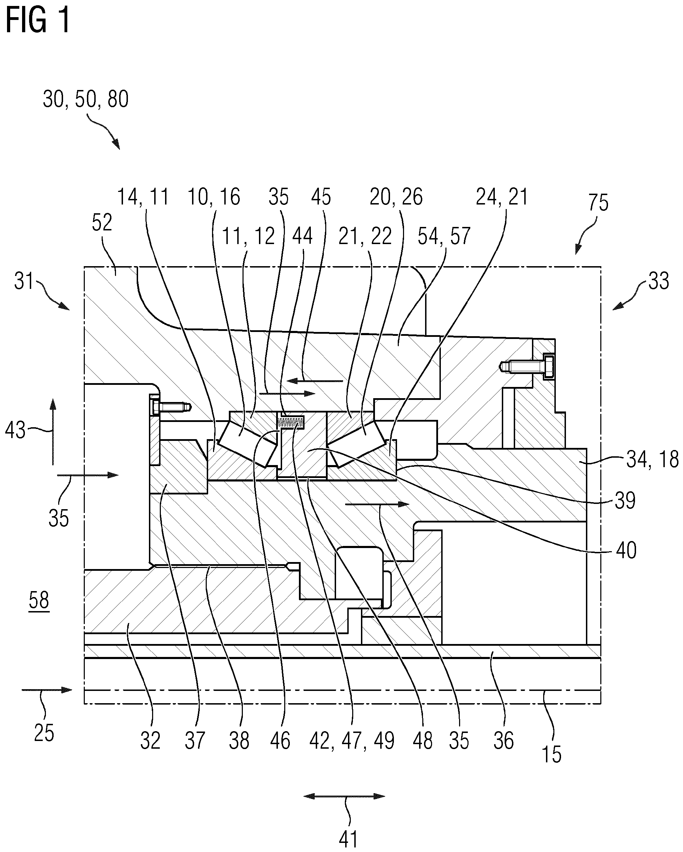

In FIG 1 ist schematisch eine erste Ausführungsform einer beanspruchten Lageranordnung 30 im montierten Zustand dargestellt, die ein erstes Wälzlager 10 und ein zweites Wälzlager 20 aufweist. Die Lageranordnung 30 ist in einem Getriebe 50 angeordnet, das über ein Gehäuse 52 verfügt. Zum Gehäuse 52 gehört ein verjüngt ausgebildeter Gehäuseabschnitt 54, in dem die Lageranordnung 30 aufgenommen ist. Der Gehäuseabschnitt 54 dient für die Lageranordnung 30 im Wesentlichen als Nabe 57. In der Lageranordnung 30 ist eine Leistungswelle 34 aufgenommen, die als Hohlwelle 18 ausgebildet ist, als Getriebeausgangswelle dient und als Rotorwelle für einen nicht näher gezeigten Generator 75 einsetzbar ist. Die Leistungswelle 34 ist lösbar mit einer Sonnenwelle 32 des Getriebes 50 über eine Welle-Nabe-Verbindung 38 drehmomentübertragend gekoppelt. Die Sonnenwelle 32 gehört zu zumindest einer Planetenstufe 58, die nicht näher dargestellt ist. Die Leistungswelle 34 ist um eine Hauptdrehachse 15 des Getriebes 50 gelagert und dazu geeignet, eine im Getriebe 50 vorliegende Antriebsleistung 25 zu transportieren. Die Antriebsleistung 25 wird durch die Leistungswelle 34 von einer Getriebeseite 31 zu einer Generatorseite 33 geleitet. Das erste Wälzlager 10 umfasst einen Außenring 12, einen Innenring 14 und dazwischen angeordnete Wälzkörper 16. Analog umfasst auch das zweite Wälzlager 20 einen Außenring 22, einen Innenring 24 und dazwischen angeordnete Wälzkörper 26. Das erste und zweite Wälzlager 10, 20 sind in O-Anordnung angeordnet. Beim ersten und zweiten Wälzlager 10, 20 dient jeweils der Außenring 12, 22 als stationäre Komponente 11, die im montierten Zustand drehfest im Gehäuse 52 angeordnet ist. Als Pendant dazu stellen die Innenringe 14, 24 des ersten und zweiten Wälzlagers 10, 20 rotierende Komponenten 17 dar. Durch eine Übermaßpassung mit dem Gehäuseabschnitt 54 kann eine Axialvorspannung der Wälzlager 10, 20 und des Distanzelements 40 gehalten werden.

Zwischen dem ersten und zweiten Wälzlager 10, 20 ist das Distanzelement 40 angeordnet, das im Wesentlichen umlaufend ausgebildet ist, und durch das das erste und zweite Wälzlager 10, 20 entlang einer Axialrichtung 41 beabstandet sind. Das Distanzelement 40 ist im Wesentlichen ringförmig ausgebildet und erstreckt sich vom Gehäuse 52 in eine Radialrichtung 43 nach innen. Zwischen dem Distanzelement 40 und der Leistungswelle 34 ist ein Innenspalt 48 ausgebildet, so dass zwischen dem Distanzelement 40 und der Leistungswelle 34 kein Kontakt vorliegt. Das Distanzelement 40 weist in einem radial äußeren Bereich eine Vertiefung 44 auf, die sich im Wesentlichen in Axialrichtung 41 erstreckt und in der ein elastisches Federelement 42 aufgenommen ist, das als Druckfeder ausgebildet ist. Im endmontierten Zustand nach FIG 1 wird durch das Federelement 42 eine Rückstellkraft 45 ausgeübt, die im Gleichgewicht mit einer Axialkraft 35 steht. Die Axialkraft 35 wird über eine Wellenmutter 37 ausgeübt, der lösbar auf der Leistungswelle 34 angebracht ist. Die Axialkraft 35 wird bei einer Vormontage über den Innenring 14 auf die Wälzkörper 16 und von dort auf den Außenring 12 des ersten Wälzlagers 10 übertragen. Weiter wird dabei die Axialkraft 35 durch die Rückstellkraft 45 des Federelements 42 abgestützt und so auf das Distanzelement 40 übertragen. Das Distanzelement 40 stützt sich wiederum am Außenring 22 des zweiten Wälzlagers 20 ab. Der Außenring 22 überträgt dabei die Axialkraft 35 über die Wälzkörper 26 auf den Innenring 24, das an einer Schulter 39 der Leistungswelle 34 abgestützt ist. Die Lageranordnung 30 gemäß FIG 1 ist ferner in einem Computerprogrammprodukt 80 abgebildet, mit dem deren Betriebsverhalten im Getriebe 50 simulierbar ist.

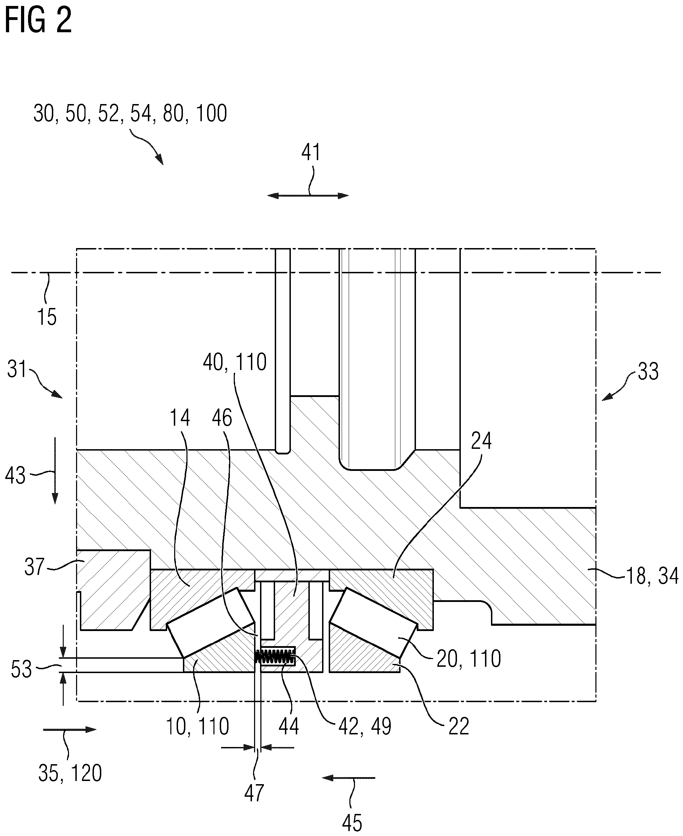

Eine Detailansicht der Ausführungsform der beanspruchten Lageranordnung 30 aus FIG 1 ist in FIG 2 in einem vormontierten Zustand dargestellt. Ebenso zeigt FIG 2 eine Ausführungsform des beanspruchten Verfahrens 100 zur Montage einer Lageranordnung 30 in einem Stadium des Verfahrens 100. In FIG 2 ist die vormontierte Lageranordnung 30 dargestellt, die in einem Gehäuseabschnitt 54 eines Gehäuses 52 des Getriebes 50 anzuordnen ist. Gleichermaßen sind ein Außenring 12, 22 eines ersten und eines zweiten Wälzlagers 10, 20 dargestellt, die auf einer Leistungswelle 34 angeordnet sind, die als Hohlwelle 18 ausgebildet ist. Die Wälzlager 10, 20 sind in Axialrichtung 41 hintereinander angeordnet. Zwischen dem ersten und zweiten Wälzlager 10, 20 ist ein Distanzelement 40 vorgesehen. Das erste und zweite Wälzlager 10, 20 werden im beanspruchten Verfahren 100 in einem ersten Schritt 110 auf die Leistungswelle 34 aufgesetzt. Das Aufsetzen erfolgt dabei von einer Getriebeseite 31, die einer Generatorseite 33 gegenüberliegend angeordnet ist. In einem zweiten Schritt 120 wird eine auf die Lageranordnung 30 auf der Leistungswelle 34 eine Axialkraft 35 ausgeübt, indem auf das erste Wälzlager 10 mittels einer Wellenmutter 37 eine Druckkraft ausgeübt wird. Das Distanzelement 40 weist in einem radial äußeren Bereich 53 zumindest ein Federelement 42 auf, das in einer Vertiefung 44 im Distanzelement 40 teilweise aufgenommen ist. Das Federelement 42 stützt sich an einer generatorseitigen Stirnseite 13 des ersten Wälzlagers 10 ab. Das Federelement 42 weist eine Federstärke 49 auf, durch die eine Rückstellkraft 45 hervorgerufen wird, die der Axialkraft 35 entgegengereichtet ist. Weiter drückt das Distanzelement 40 in Axialrichtung 41 auf das zweite Wälzlager 20, das gegen die Leistungswelle 34 abgestützt ist. Es stellt sich unter anderem in Abhängigkeit von der Axialkraft 35 ein statischer Zustand ein. Das Distanzelement 40 und das zumindest eine Federelement 42 sind derart ausgebildet, dass zwischen dem Distanzelement 40 und der generatorseitigen Stirnfläche 13 des ersten Wälzlagers 10 ein Prüfspalt 46 entsteht. Der Prüfspalt 46 weist eine Spaltbreite 47 auf, die mittels einer Fühlerlehre 56 in einem dritten Schritt 130 prüfbar ist und/oder mit einem geeigneten Messmittel gemessen werden kann. Die Spaltbreite 47 ist über Fühlerlehren 56 in einfacher und präziser Weise prüfbar, also im Wesentlichen messbar. Dementsprechend ist die der Prüfspalt 46 durch wiederholtes Durchführen des Verfahrens 100 mit einer angestrebten Genauigkeit einstellbar, die höchstens durch die Dickenabstufungen der Fühlerlehren 56 begrenzt ist. Dazu kann die Lageranordnung 30 auch wieder demontiert werden und mit überarbeiteten Wälzlagern 10, 20, einem überarbeiteten Distanzelement 40, und/oder einer überarbeiteten Nabe 57 neu montiert werden. Unter einem Überarbeiten ist dabei eine bauliche Anpassung, beispielweise durch Herunterdrehen einer Stirnfläche zu verstehen. Der Aufbau nach FIG 2 ist auch in einem Computerprogrammprodukt 80 abgebildet, mit dem das dort vorliegende Betriebsverhalten simulierbar ist. Zum zu simulierenden Betriebsverhalten gehören unter anderem ein Verhalten während einer Montage der Lageranordnung 30 in ein Gehäuse 50, Schwankungen der Axialkraft 35 und die daraus resultierenden Schwankungen der Rückstellkraft 45, und/oder ein Ermüdungs- und Relaxationsverhalten der Lageranordnung 30 in einem montierten Zustand wie in FIG 1.

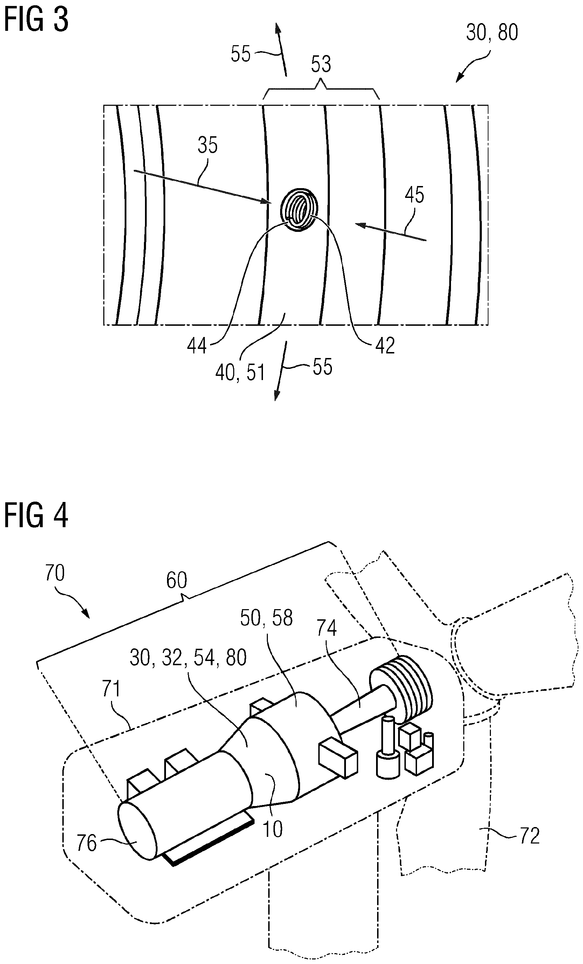

FIG 3 zeigt in einer Schrägansicht einen Ausschnitt eines Distanzelements 40 gemäß einer zweiten Ausführungsform der beanspruchten Lageranordnung 30. Das Distanzelement 40 weist an einer Stirnfläche 51, die einem Außenring 12, 22 eines Wälzlagers 10, 20 zugewandt ist, eine Vertiefung 44 auf. In der Vertiefung 44 ist ein Federelement 42 aufgenommen, das dazu ausgebildet ist, durch seine Rückstellkraft 45 einer Axialkraft 35 entgegenzuwirken und einen Prüfspalt 46 herzustellen. Mehrere derartige Vertiefungen 44 mit je einem Federelement 42 sind entlang einer Umfangsrichtung 55 in einem radial äußeren Bereich 53 des Distanzelement 40 ausgebildet. Das Federelement 42 nach FIG 3 ist als Druckfeder ausgebildet. Je mehr Vertiefungen 44 mit Federelementen 42 am Distanzelement 40 ausgebildet sind, umso höhere Rückstellkräfte 45 können ausgeübt werden. Darüber hinaus erlauben mehrere Federelemente 42, die in Umfangsrichtung 55 verteilt angeordnet am Distanzelement 40 angebracht sind, eine gerade Ausrichtung des Distanzelements 40 im vormontierten Zustand. Das Distanzelement 40 nach FIG 3 ist ebenfalls in einem Computerprogrammprodukt 80 abgebildet, mit dem das Betriebsverhalten der Lageranordnung 30 simulierbar ist.

Des Weiteren ist in FIG 4 eine Ausführungsform einer beanspruchten Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 60 gehört. Der Antriebsstrang 60 umfasst auch ein Getriebe 50, das drehmomentübertragend mit der Hauptwelle 74 verbunden ist. Das Getriebe 50 weist zumindest eine Planetenstufe 58 auf und ist wiederum mit einem Generator 76 gekoppelt. Das Getriebe 50 weist an seinem Gehäuse 52 einen verjüngten Gehäuseabschnitt 54 auf, in dem eine Lageranordnung 30 vorgesehen ist. Die Lageranordnung 30 ist dabei gemäß einer der oben beschriebenen Ausführungsformen ausgebildet. Die Lageranordnung 30 ist in einem Computerprogrammprodukt 80 abgebildet, das dazu geeignet ist, deren Betriebsverhalten während eines Betriebs der Windkraftanlage 70 zu simulieren.

## Patentansprüche

1. Lageranordnung (30), umfassend ein erstes und ein zweites Wälzlager (10,20), zwischen denen ein Distanzelement (40) angeordnet ist, **dadurch gekennzeichnet , dass** zu einem Hervorrufen eines Prüfspalts (46) zwischen dem Distanzelement (40) und einer Komponente (11) des ersten Wälzlagers (10) mindestens ein in Axialrichtung (41) elastisches Federelement (42) angeordnet ist.

2. Lageranordnung (30) nach Anspruch 1, **dadurch gekennzeichnet , dass** die Komponente (11) des ersten Wälzlagers (10) eine stationäre Komponente (11), insbesondere ein Außenring (12) oder ein Innenring (14), ist.

3. Lageranordnung (30) nach Anspruch 1 oder 2, **dadurch gekennzeichnet , dass** das mindestens eine Federelement (42) als Druckfeder, Tellerfeder, oder als Elastomerkörper ausgebildet ist.

4. Lageranordnung (30) nach einem der Ansprüche 1 bis 3, **dadurch gekennzeichnet , dass** das erste und/oder zweite Wälzlager (10,20) als Pendelrollenlager, als Kegelrollenlager, als Schrägkugellager, oder als Axial-Pendelrollenlager ausgebildet ist.

5. Lageranordnung (30) nach einem der Ansprüche 1 bis 4, **dadurch gekennzeichnet , dass** das Distanzelement (40) in einem Bereich einer rotierenden Komponente (17) des ersten und/oder zweiten Wälzlagers (10, 20) von der rotierenden Komponente (17) kontaktfrei ist.

6. Lageranordnung (30) nach einem der Ansprüche 1 bis 5, **dadurch gekennzeichnet , dass** eine Mehrzahl an Federelementen (42) in Umfangsrichtung (55) gleichmäßig am Distanzelement (40) angeordnet ist.

7. Lageranordnung (30) nach einem der Ansprüche 1 bis 6, **dadurch gekennzeichnet , dass** die Außenringe (12,14) der Wälzlager (10, 20) in einem Gehäuseabschnitt (54) aufgenommen sind.

8. Lageranordnung (30) nach einem der Ansprüche 1 bis 7, **dadurch gekennzeichnet , dass** in den Innenringen (14,24) der Wälzlager (10,20) eine Leistungswelle (34) aufgenommen ist, die als eine Welle oder eine Hohlwelle (18) ausgebildet ist.

9. Lageranordnung (30) nach einem der Ansprüche 1 bis 8, **dadurch gekennzeichnet , dass** das zumindest eine elastische Federelement (42) in einer Vertiefung (44) im Distanzelement (40) aufgenommen ist.

10. Verfahren (100) zur Montage einer Lageranordnung (30), die ein erstes, ein zweites Wälzlager (10,20) und ein Distanzelement (40) umfasst, umfassend die Schritte:
a) Aufsetzen des ersten und zweiten Wälzlagers (10,20) und des Distanzelements (40) auf einer Welle oder Hohlwelle (18) ;
b) Aufbringen einer Axialkraft (35) auf die Lageranordnung (30) ;
c) Prüfen oder Messen der Spaltbreite (47) eines Prüfspalts (46) ;
wobei der Prüfspalt (46) zwischen dem Distanzelement (40) und einer Komponente (12,14,16) des ersten Wälzlagers (10) ausgebildet ist.

11. Verfahren (100) nach Anspruch 10, **dadurch ge**- **kennzeichnet**, dass die Lageranordnung (30) nach zumindest einem der Ansprüche 1 bis 9 ausgebildet ist.

12. Getriebe (50), umfassend zumindest eine Planetenstufe (58), die mit einer Leistungswelle (34) drehmomentübertragend verbunden ist, die in einem Gehäuseabschnitt mittels einer Lageranordnung (30) drehbar gelagert ist, **dadurch gekennzeichnet , dass** die Lageranordnung (30) nach einem der Ansprüche 1 bis 9 ausgebildet ist.

13. Antriebsstrang (60) für eine Windkraftanlage (70), umfassend eine Hauptwelle (74), die drehmomentübertragend mit einem Mehrblattrotor (72) verbindbar ist, und ein Getriebe (50), das mit einem Generator (76) verbunden ist, **da**- **durch gekennzeichnet** , dass das Getriebe (50) nach Anspruch 12 ausgebildet ist.

14. Windkraftanlage (70), umfassend eine Gondel (71), an der drehbar ein Mehrblattrotor (72) angebracht ist und drehmomentübertragend mit einem Antriebsstrang (60) verbunden ist, **dadurch gekennzeichnet , dass** der Antriebsstrang (60) nach Anspruch 13 ausgebildet ist.

15. Computerprogrammprodukt (80) zum Simulieren eines Betriebsverhaltens einer Lageranordnung (30), die in einer Windkraftanlage (70) eingesetzt wird, **dadurch ge**- **kennzeichnet**, dass die Lageranordnung (30) nach einem der Ansprüche 1 bis 9 ausgebildet ist.
